# EUROPÄISCHE PATENTSCHRIFT

(11) **EP 2 547 565 B1**
(45) Veröffentlichungstag und Bekanntmachung des Hinweises auf die Patenterteilung: **16.03.2016**
(21) Anmeldenummer: 11708470.7
(22) Anmeldetag: 16.03.2011
(51) Int. Cl.: B60T 13/68, B60T 13/38

(54) **ELEKTRISCH BETÄTIGBARES FESTSTELLBREMSSYSTEM**
ELECTRICALLY ACTUATABLE PARKING BRAKE SYSTEM
SYSTÈME DE FREIN DE STATIONNEMENT À COMMANDE ÉLECTRIQUE

(30) Priorität: 19.03.2010 DE 102010011978
(43) Veröffentlichungstag der Anmeldung: 23.01.2013
(73) Patentinhaber: KNORR-BREMSE Systeme für Nutzfahrzeuge GmbH, 80809 München (DE)
(72) Erfinder: VUCKOVIC, Zoran, 81541 München (DE)
(74) Vertreter: Schönmann, Kurt
(86) Internationale Anmeldenummer: PCT/EP2011/053945
(87) Internationale Veröffentlichungsnummer: WO 2011/113853

(56) Entgegenhaltungen:
- DE-A1-102007 061 908
- DE-B3-102008 007 877

## Beschreibung

Die Erfindung betrifft ein elektrisch betätigbares Feststellbremssystem für eine pneumatische Bremsanlage, mit einer einen Steuerkolben aufweisenden Steuerventileinrichtung, wobei das Feststellbremssystem mindestens zwei Betriebszustände einnehmen kann, nämlich einen Parkzustand oder einen Fahrzustand, die Betriebszustände selektiv in Abhängigkeit einer Stellung des Steuerkolbens einnehmbar sind und der Parkzustand vorliegt, wenn der Steuerkolben durch die Kraft einer in einem Federraum angeordneten Feder in eine Endlage gezwungen ist.

Die vorliegende Offenbarung befasst sich mit elektrisch betätigbaren Feststellbremssystemen, wie sie beispielsweise in der DE 10 2008 007 877 B3 beschrieben sind. Eine zentrale sicherheitsrelevante Anforderung an derartige Systeme besteht darin, dass ein Stromausfall nicht zu einer Zustandsänderung der Feststellbremsen führen darf- befindet sich die Feststellbremse in ihrem Parkzustand, so muss auch bei Stromausfall der Parkzustand aufrechterhalten werden, um so ein unbeabsichtigtes Wegrollen des Nutzfahrzeugs in jedem Fall zu verhindern, befindet sich die Feststellbremse in einem Fahrzustand, so darf bei Stromausfall die Feststellbremse nicht schlagartig eingelegt werden, da dies während der Fahrt zu gefährlichen Situationen führen kann.

Um diesen sicherheitsrelevanten Anforderungen zu genügen, können bistabile Steuerventile eingesetzt werden. Diese können elektrisch oder pneumatisch ansteuerbar sein. Die vorliegende Erfindung befasst sich mit pneumatisch ansteuerbaren Schaltventileinrichtungen, die in der Weise in ein elektrisch betätigbares Feststellbremssystem eingebunden sind, dass eine Bistabilität gegeben ist und somit den vorstehend erwähnten sicherheitsrelevanten Anforderungen genügt wird.

Elektrisch betätigbare Feststellbremssysteme und insbesondere die erwähnten pneumatischen Steuerventileinrichtungen sind so auszulegen, dass absolute Schaltsicherheit gewährleistet ist. Werden die Druckverhältnisse im Feststellbremssystem also umgestellt, um ein Umschalten der Steuerventileinrichtung zu bewirken, so muss die Steuerventileinrichtung sicher schalten können, und dies bei jeglichen äußeren Umständen, insbesondere auch bei tiefen Temperaturen, welche ein Umschalten der Schaltventileinrichtung insbesondere aufgrund erhöhter Reibungskräfte behindern können.

Der Erfindung liegt die Aufgabe zugrunde, ein Konzept zur Verfügung zu stellen, bei dem die Bistabilität einer pneumatischen Steuerventileinrichtung für ein elektrisch betätigbares Feststellbremssystem gewährleistet ist, wobei insbesondere ein stabiler Parkzustand sichergestellt werden soll.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf dem eingangs genannten gattungsgemäßen Stand der Technik dadurch auf, dass aus einem Entlüftungsanschluss der Steuerventileinrichtung austretende Leckluft in den Federraum rückführbar ist. Die in den Federraum rückführbare Leckluft kann die Wirkung der Feder unterstützen, also zu der Kraft beitragen, mit der der Kolben in eine den Parkzustand sichernde Stellung gezwungen wird.

Insbesondere kann vorgesehen sein, dass die Steuerventileinrichtung zusätzlich zu dem Entlüftungsanschluss einen ersten Arbeitsanschluss, einen zweiten Arbeitsanschluss und einen pneumatischen Steuereingang aufweist, wobei die Steuerventileinrichtung durch Belüften des Steuereingangs den Fahrzustand einnimmt, in dem die Arbeitsanschlüsse miteinander verbunden sind und in dem der zweite Arbeitsanschluss gegen den Entlüftungsanschluss abgedichtet ist, und die Steuerventileinrichtung durch Entlüften des Steuereingangs und Federkraft einen Parkzustand einnimmt, in dem die Arbeitsanschlüsse gegeneinander abgedichtet sind und der zweite Arbeitsanschluss mit dem Entlüftungsanschluss verbunden ist. In dem Parkzustand sollen der zweite Arbeitsanschluss und die nachgeordneten Komponenten mit dem Entlüftungsanschluss verbunden sein, so dass das System drucklos ist. Der erste Arbeitsanschluss, der mit der Druckluftquelle verbunden ist, soll dabei abgedichtet sein, insbesondere also nicht mit dem Entlüftungsanschluss verbunden sein. Gleichwohl ist eine gewisse Leckage nicht ausgeschlossen, so dass Leckluft zum Entlüftungsanschluss geleitet werden kann. Diese wird dann dem Federraum zur Unterstützung der Aufrechterhaltung des Parkzustandes zugeführt.

In diesem Zusammenhang ist es besonders nützlich, dass der zweite Arbeitsanschluss mit einem Druckluftverbraucher koppelbar ist, dass der pneumatische Steuereingang zumindest mittelbar mit dem Steuereingang eines Relaisventils für die Feststellbremse gekoppelt ist, dass der Entlüftungsanschluss mit einer Steuer- und Entlüftungsventileinrichtung gekoppelt ist und dass ein Entlüftungsausgang der Steuer- und Entlüftungsventileinrichtung mit dem Federraum gekoppelt ist. Die Steuer- und Entlüftungsventileinrichtung, welche vorzugsweise als Magnetventil ausgelegt ist, liefert die pneumatischen Signale für die Steuerventileinrichtung. Insbesondere stellt sie auch einen Entlüftungsausgang zur Verfügung, über den der Systemdruck der Feststellbremsanlage abgebaut werden kann, womit gleichzeitig ein Steuersignal für die Steuerventileinrichtung zur Verfügung gestellt wird. Die über den Entlüftungsanschluss der Steuer- und Entlüftungsventileinrichtung austretende Leckluft kann dann genutzt werden, um dem Federraum der Steuerventileinrichtung zugeführt zu werden.

Die Erfindung ist in besonders vorteilhafter Weise dadurch weitergebildet, dass der Entlüftungsausgang der Steuer- und Entlüftungsventileinrichtung mit einem eine Drossel- oder Stauwirkung erbringenden Bauteil gekoppelt ist und zwischen dem Entlüftungsausgang und dem Bauteil eine zu dem Federraum führende Leckluftrückführleitung abzweigt. Dass die Drossel- oder Stauwirkung erbringende Bauteil stellt sicher, dass die Leckluft nicht einfach in die Atmosphäre abströmt, sondern rückgeführt werden kann, um im Federraum der Steuer- und Ventileinrichtung die Federwirkung zu unterstützen.

Dabei kann insbesondere vorgesehen sein, dass das die Drossel- oder Stauwirkung erbringenden Bauteil ein Rückschlagventil ist.

Dann ist es besonders nützlich, dass Öffnungs- und Schließdruck des Rückschlagventils so gewählt sind, dass das Rückschlagventil bei einem ersten Druckniveau unterhalb eines Systemdrucks öffnet, um eine Entlüftung des Feststellbremssystems zuzulassen, und bei einem zweiten Druckniveau unterhalb des ersten Druckniveaus zumindest teilweise schließt, um eine Drossel- oder Stauwirkung zu erbringen. Das Rückschlagventil behindert also nicht oder nur unmaßgeblich die Entlüftung des Systems beim Übergang vom Fahrzustand in den Parkzustand. Gleichwohl reicht die Drossel- oder Stauwirkung des Rückschlagventils aus, um im Parkzustand ein Abströmen der Leckluft in die Atmosphäre zumindest teilweise zu verhindern und im Federraum der Steuerventileinrichtung einen Druck aufzubauen.

In diesem Zusammenhang kann besonders nützlich sein, dass Öffnungs- und/oder Schließdruck des Rückschlagventils einstellbar sind. Dies kann von Vorteil sein, da sich die Leckagerate der Steuerventileinrichtung im Laufe der Systemlebensdauer ändert, insbesondere vergrößern kann. Durch Ändern der Schaltdrücke des Rückschlagventils kann hier eine Anpassung erfolgen, insbesondere im Rahmen einer Wartung, um nachhaltig eine sichere Funktionsweise des Systems zu gewährleisten.

Im Zusammenhang mit der vorliegenden Erfindung wurde die Nutzung der Leckluft zur Sicherstellung des Parkzustandes beschrieben, wobei vorstehend davon ausgegangen wurde, dass die Leckage, über welche die Leckluft abströmt, eine unerwünschte Eigenschaft der Steuerventileinrichtung ist. Es kann aber sogar vorgesehen sein, dass die Steuerventileinrichtung gezielt mit einem Leck ausgestattet wird, um so einen definierten Beitrag zu der den Parkzustand sicherstellenden Kraft zu erbringen.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm eines elektrisch betätigbaren Feststellbremssystems;
- Figur 2: eine Steuerventileinrichtung mit einem verschiebbaren Ventilsitz in einer Fahrstellung;
- Figur 3: eine Steuerventileinrichtung mit einem verschiebbaren Ventilsitz in einer Zwischenstellung;
- Figur 4: eine Steuerventileinrichtung mit einem verschiebbaren Ventilsitz in einer Parkstellung;
- Figur 5: eine Steuerventileinrichtung mit einem festen Ventilsitz in einer Fahrstellung und
- Figur 6: eine Steuerventileinrichtung mit einem festen Ventilsitz in einer Parkstellung.

Bei der nachfolgenden Beschreibung der Schaltungsdiagramme und der Schnittansichten von Ventileinrichtungen bezeichnen gleiche Bezugszeichen gleiche oder vergleichbare Komponenten. Die Schaltungen umfassen als zentrale Einrichtungen 3/2-Wegeventile. Diese können jeweils durch zwei 2/2-Wegeventile ersetzt werden, wobei die anhand der 3/2-Wegeventile erläuterten Grundsätze dann im Rahmen der vorliegenden Erfindung auf die 2/2-Wegeventilgruppen zu übertragen sind.

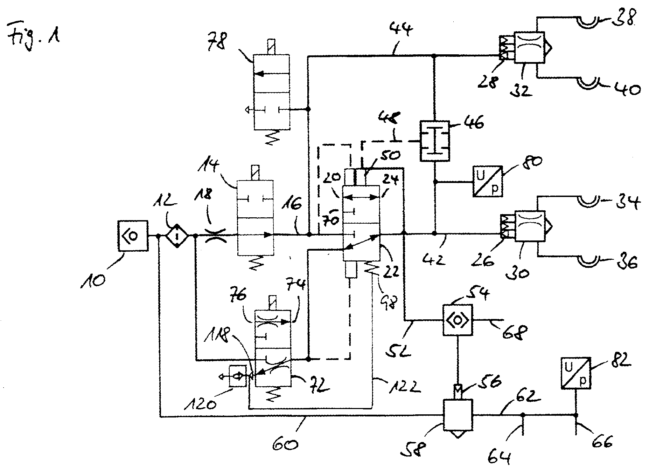

Figur 1 zeigt ein Schaltungsdiagramm eines elektrisch betätigbaren Feststellbremssystems. Das elektrisch betätigbare Feststellbremssystem ist über ein Rückschlagventil 10 mit einer nicht dargestellten Druckluftaufbereitungsanlage verbunden. Auf das Rückschlagventil 10 folgt ein optionales Sieb bzw. eine optionale Filtereinheit 12, über die Druckluft unter Zwischenschaltung einer optionalen Drossel 18 einem Versorgungsmagnetventil 14, das als 2/2-Wegeventil ausgelegt ist, zugeführt wird. Die Drossel 18 sorgt dafür, dass die Wirkung eingangsseitiger Leckagen limitiert wird. An den Ausgang des Versorgungsmagnetventils 14 ist über einen Versorgungsleitungsabschnitt 16 ein Arbeitsanschluss 20 einer Steuerventileinrichtung 22 angeschlossen. Die Steuerventileinrichtung 22 ist als pneumatisch ansteuerbares 3/2-Wegeventil ausgelegt. Ein zweiter Arbeitsanschluss 24 der Steuerventileinrichtung 22 führt zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen Anhängersteuerleitungszweig 44 mit dem Versorgungsleitungszweig 16 verbunden. Es hat einen Versorgungsanschluss 38 und einen Steueranschluss 40. Die Anhängersteuerleitungszweige 42, 44 sind mit Eingängen eines Select-Low-Ventils 46 verbunden, dessen Ausgang über eine Steuerleitung 48 mit einem Steuereingang 50 der Steuerventileinrichtung 22 verbunden ist. Das Select-Low-Ventil arbeitet so, dass an seinem Ausgang, das heißt in der Steuerleitung 48, der niedrigere Eingangsdruck ansteht, das heißt der niedrigere Druck aus den beiden Anhängersteuerungsleitungszweigen 42, 44. Die Steuerleitung 48 steht weiterhin über eine Relaissteuerleitung 52 und ein Wechselventil 54 mit dem Relaissteuereingang 56 eines Relaisventils 58 in Verbindung. Das Relaisventil 58 bezieht über eine Relaisversorgungsleitung 60 Druckluft von einer Stelle stromaufwärts des Versorgungsmagnetventils 14. Eine Relaisausgangsleitung führt zu Leitungszweigen 64, 66, an denen nicht dargestellte Federspeicherzylinder angeschlossen sind. An dem Wechselventil 54 ist ferner eine Betriebsbremsleitung 68 angeschlossen. Mit einem Entlüftungsanschluss 70 der Steuerventileinrichtung 22 ist ein Anschluss 74 einer Steuer- und Entlüftungsventileinrichtung 72 verbunden. Ein weiterer Anschluss 76 der Steuer- und Entlüftungsventileinrichtung 72 wird von einem Punkt zwischen der Filtereinheit 12 und dem Versorgungsmagnetventil 14 mit Druckluft versorgt. Weiterhin ist ein als ein 2/2-Wegeventil ausgelegtes Entlüftungsventil 78 vorgesehen, das mit dem Versorgungsleitungsabschnitt 16 verbunden ist. Es sind ferner Drucksensoren 80, 82 zum Erfassen der Drücke an dem zweiten Arbeitsanschluss 24 der Steuerventileinrichtung 22 sowie der Relaisausgangsleitung 62 vorgesehen.

In dem in Figur 1 dargestellten Schaltzustand ist der zweite Arbeitsausgang der Steuerventileinrichtung 22 über die Steuer- und Entlüftungsventileinrichtung 72 entlüftet, so dass in Abwesenheit einer Druckbeaufschlagung über die Betriebsbremsleitung 68 auch der Steuereingang 56 des Relaisventils 58 entlüftet ist. Folglich sind die nicht dargestellten Federspeicherzylinder drucklos, so dass sich die Feststellbremse in ihrer Parkstellung befindet. Zum Überführen der Feststellbremse in eine Fahrstellung wird nun die Steuer- und Entlüftungsventileinrichtung 72 umgeschaltet. Folglich baut sich insbesondere in dem Steuerleitungszweig 48, der Relaissteuerleitung 52 und an dem Relaissteuereingang 56 ein Druck auf. Dieser Druck führt beim Überschreiten eines Schwellenwertes zum Durchschalten des Relaisventils 58, so dass die Federspeicherzylinder mit Druck beaufschlagt werden und die Feststellbremse gelöst wird. Ebenso ist der Druck in der Steuerleitung 48 die treibende Kraft zum Umschalten des Steuerventils 22. Je nach Schaltstrategie kann dieses Umschalten erfolgen, bevor die Steuer- und Entlüftungseinrichtung 72 wieder in ihren dargestellten stromlosen Zustand überführt wird. Soll das Umschalten stattfinden, während sich die Steuer- und Entlüftungsventileinrichtung 72 noch in ihrem bestromten Zustand befindet, so ist die Steuerventileinrichtung 22 mit solchen Wirkflächen auszustatten, dass die an den Anschlüssen anstehenden Drücke Kräfte erzeugen, welche die Federkraft der Steuerventileinrichtung 22 überwinden. Die Schaltstrategie, welche ein Umschalten der Steuerventileinrichtung 22 gegen die Federkraft nach einem Umschalten der Steuer- und Entlüftungsventileinrichtung 72 in ihren umbestromten Zustand erlaubt, beruht auf später erläuterten dynamischen Abläufen. Wurde somit also wie auch immer erreicht, dass die Steuerventileinrichtung 22 umgeschaltet hat, so kann sich der Druck an den Steuereingängen 50 und 56 der Steuerventileinrichtung 22 und des Relaisventils 58 weiter aufbauen, da die entsprechenden Leitungszweige nun aus dem Versorgungsleitungsabschnitt 16 mit Druckluft versorgt werden. Insbesondere verbleibt die Steuerventileinrichtung 22 beim Ausbleiben weiterer Schaltvorgänge der Magnetventile 14, 72, 78 in ihrem Zustand. Ein Stromausfall hat hierauf keinen Einfluss, so dass kein unbeabsichtigtes

Überführen der Feststellbremsanlage in ihren Parkzustand stattfinden kann. Ein solches Umschalten erfolgt hingegen planmäßig dadurch, dass das Entlüftungsmagnetventil 78 bestromt wird, so dass der Druck im Versorgungsleitungsabschnitt und somit auch an den Steuereingängen 50, 56 der Steuerventileinrichtung 22 und des Relaisventils 56 abnimmt. Dies führt zu einem Umschalten der Steuerventileinrichtung 22 in ihre dargestellte Stellung und zu einem nachfolgenden vollständigen Entlüften der Steuereingänge 50, 56 der Steuerventileinrichtung 22 und des Relaisventils 58. Die so eingenommene Parkstellung ist durch die Federwirkung in der Steuerventileinrichtung 22 gesichert, so dass ein Stromausfall wiederum nicht dazu führen kann, dass unbeabsichtigt ein Übergang vom Parkzustand in den Fahrzustand erfolgen kann.

Ein weiterer Schaltzustand des Systems liegt dann vor, wenn das Entlüftungsventil 78, das Versorgungsmagnetventil 14 und die Steuer- und Entlüftungsventileinrichtung 72 bestromt werden, so dass der Steuereingang 50 der Steuerventileinrichtung 22 und der Steuereingang 56 des Relaisventils entlüftet werden, der Steuereingang 26 des Anhängersteuerventils 30 hingegen belüftet wird. Diese Druckverhältnisse im System bewirken ein Lösen der Anhängerbremse, während die Feststellbremse des Zugfahrzeugs eingelegt wird oder bleibt. Es liegt also ein Anhängertestzustand vor, bei dem überprüft werden kann, ob es der gesamte aus Zugfahrzeug und Anhänger bestehende Zug alleine von der Feststellbremse des Zugfahrzeugs gehalten werden kann.

Dem Entlüftungsausgang 118 der Steuer- und Entlüftungsventileinrichtung 72 ist ein Rückschlagventil 120 nachgeordnet. In Strömungsrichtung vor dem Rückschlagventil zweigt eine Leckluftrückführleitung 122 ab, die Leckluft zu dem hier nicht im Detail dargestellten Federraum der Steuerventileinrichtung 22 führt, in dem eine Feder 98 zur Sicherstellung des Parkzustandes angeordnet ist. Kommt es nun in dem dargestellten Schaltzustand der Steuerventileinrichtung 22 zu einer Leckage, das heißt insbesondere zu einem Übertritt von an dem ersten Arbeitsanschluss 20 anstehender Druckluft zu dem Entlüftungsanschluss 70 der Steuerventileinrichtung 22 und somit zu dem Entlüftungsausgang 118 der Steuer- und Entlüftungsventileinrichtung 72, so kann diese Leckluft über die Leckluftrückführleitung 122 zu dem Federraum der Steuerventileinrichtung 22 zurückgeführt werden. Hierzu ist der Öffnungsdruck des Rückschlagventils 120 insbesondere so gewählt, dass das Rückschlagventil dann nicht oder nur wenig öffnet, so dass zumindest eine Drosselwirkung für die Leckluft zur Verfügung gestellt wird, denn nur so kann es gelingen, einen wirksamen Druck im Federraum der Feder 98 der Steuerventileinrichtung 22 aufzubauen. Hierdurch wird vermieden, dass das Relaisventil 58 aufgrund eines ungewollten Druckaufbaus in der Relaissteuerleitung 52 und somit am Relaissteuereingang 56 frühzeitig öffnet. Dies könnte bei dies zulassenden Kennlinienverläufen des Relaisventils 58 sonst der Fall sein, so dass sich ein unerwünscht hoher Druck am Ausgang des Relaisventils 58 und somit in den Federspeicherzylindern aufbauen könnte. Damit würde unter Umständen die Bremswirkung der Feststellbremse in Abhängigkeit einer Beladung und einer Steigung nicht mehr ausreichen.

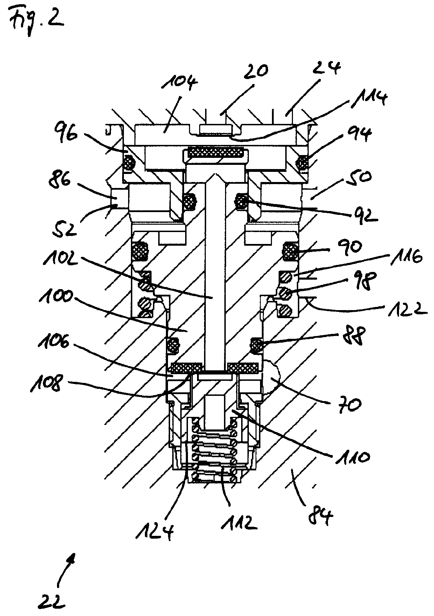

Figur 2 zeigt eine Steuerventileinrichtung 22 mit einem verschiebbaren Ventilsitz 108 in einer Fahrstellung. Ein Ventilgehäuse 84 beherbergt die Steuerventileinrichtung 22, welche einen ersten Arbeitsanschluss 20, einen zweiten Arbeitsanschluss 24, einen Steuereingang 50 und einen Entlüftungsanschluss 70 aufweist. Ferner ist ein Relaisanschluss 86 vorgesehen, der mit der Relaissteuerleitung 52 verbunden wird und an dem derselbe Druck wie am Steuereingang 50 herrscht. Die Steuerventileinrichtung 22 enthält einen Steuerkolben 100, der über drei als radiale Dichtungen wirkende O-Ringe 88, 90, 92 in dem Ventilgehäuse 84, beziehungsweise einer in dem Ventilgehäuse 84 über einen O-Ring 94 abdichtend eingelegten Manschette 96 geführt wird. Es ist eine Feder 98 vorgesehen, die den Steuerkolben 100 mit Kraft beaufschlagt. Der Steuerkolben 100 hat eine zentrale Bohrung 102, über die ein Arbeitsraum 104 mit einem Entlüftungsraum 106 kommunizieren kann. Im dargestellten Zustand der Steuerventileinrichtung 22 wird diese Kommunikation jedoch durch den abdichtend wirkenden ersten Ventilsitz 108 unterbunden. Der erste Ventilsitz 108 kommt durch ein Zusammenspiel des Steuerkolbens 100 mit einem Ventilsitzkolben 110 zur Wirkung, wobei sich der Ventilsitzkolben 110 über eine Feder 112 an dem Ventilgehäuse 84 abstützt.

Der in Figur 2 dargestellte Schaltzustand der Steuerventileinrichtung 22 liegt dann vor, wenn über den Arbeitsanschluss 20 und den Steuereingang 50 Druckluft zugeführt wird, während der Entlüftungsanschluss 70 entlüftet ist.

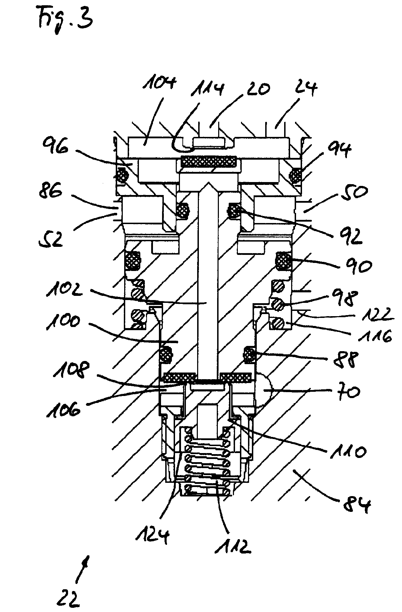

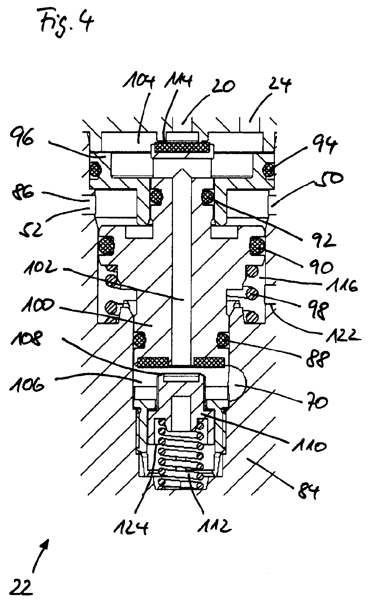

Figur 3 zeigt die Steuerventileinrichtung 22 mit verschiebbarem Ventilsitz 108 in einer Zwischenstellung. Figur 4 zeigt die Steuerventileinrichtung 22 mit verschiebbarem Ventilsitz 108 in einer Parkstellung. Soll die Steuerventileinrichtung 22 von dem in Figur 2 dargestellten Schaltzustand, dem Fahrzustand, in den in Figur 4 dargestellten Schaltzustand, den Parkzustand, überführt werden, so wird der Arbeitsanschluss 20 entlüftet. Hierdurch können die Federn 98, 112 den Steuerkolben 100 gegen den abnehmenden Druck in dem Arbeitsraum bewegen. Dabei folgt der verschiebbare Ventilsitzkolben 110 dem Steuerkolben 100. Ein hierdurch eingenommener Zwischenzustand ist in Figur 3 gezeigt. Der Steuerkolben 100 hat sich bereits in eine den Arbeitsraum 104 verkleinernde Richtung bewegt, der Ventilsitz 108 dichtet jedoch nach wie vor den Arbeitsraum 104 gegen den Entlüftungsraum 106 ab. Folglich musste bis zu diesem Zeitpunkt ein eventuelles Anhaften des Steuerkolbens 100 am Ventilsitz 108 noch nicht überwunden werden. Lediglich die Haftreibungskraft der O-Ringe 88, 90, 92 wirkte der Bewegung des Steuerkolbens 100 bisher entgegen. Erst beim nachfolgenden Übergang zu dem Schaltzustand gemäß Figur 4 müssen eventuelle Anhaftkräfte des Ventilsitzes 108 überwunden werden, während gleichzeitig nur noch die Gleitreibung der O-Ringe 88, 90, 92 zur Wirkung kommt. Somit ist das Öffnen des Ventilsitzes 108 von einer durch die Haftreibung der radialen Dichtungen bewirkte Gegenkraft befreit. Ist der Zustand in Figur 4 erreicht, so schließt der Steuerkolben 110 einen zweiten Ventilsitz 114, wodurch die Arbeitsanschlüsse 20, 24 voneinander getrennt werden. Folglich gelangt keine Druckluft mehr zu dem Arbeitsausgang 24 und bei externer Verschaltung gemäß Figur 1 auch keine Druckluft mehr zum Steuereingang 50.

Während die Anfangsbewegung des Steuerkolbens bei dem Übergang aus der Fahrstellung gemäß Figur 2 zur Parkstellung gemäß Figur 4 durch die Wirkung der Feder 112 unterstützt wird, behindert diese Feder 112 die anfängliche Bewegung des Steuerkolbens 100 beim Übergang von der Parkstellung gemäß Figur 4 zur Fahrstellung gemäß Figur 2 nicht. Indem der Entlüftungsanschluss 70 in dem Zustand gemäß Figur 4 mit Druck beaufschlagt wird, baut sich auch ein Druck in dem Arbeitraum 104 und, bei externer Verschaltung gemäß Figur 1, am Steuereingang 50 der Steuerventileinrichtung 22 auf. Nun müssen die Kraft der Feder 98 und die Haftreibung der O-Ringe 88, 90, 92 überwunden werden, nicht aber die Kraft der Feder 112. Diese spielt erst beim Schließen des Ventilsitzes 108 wieder eine Rolle, wobei dann aber bereits nur noch die Gleitreibung der O-Ringe 88, 90, 92 der Bewegung des Steuerkolbens 100 entgegenwirkt, wodurch die Steuerventileinrichtung 22 sicher in ihre Fahrstellung gemäß Figur 2 überführt werden kann.

Für den Übergang aus der Fahrstellung gemäß Figur 2 in die Parkstellung gemäß Figur 4 ist es besonders nützlich, wenn die Anfangsbewegung des Steuerkolbens 100 dadurch unterstützt wird, dass der Entlüftungsausgang 70 belüftet wird. Bei der Schaltung gemäß Figur 1 erfolgt dies durch Bestromen des Steuer- und Entlüftungsmagnetventils 72. Ist der Ventilsitzkolben 110 dann in der Weise im Ventilgehäuse 84 angeordnet, dass seine dem Ventilsitz 108 abgewandte, also der Feder 112 zugewandte Fläche 124 von dem über den Entlüftungsanschluss 70 zugeführten Druck beaufschlagt wird, so unterstützt die hierdurch entstehende Kraft in nützlicher Weise die Bewegung des Steuerkolbens in Richtung des zweiten Ventilsitzes 114.

Die Feder 98, welche den Steuerkolben 100 der Steuerventileinrichtung 22 in den Parkzustand, also den Zustand gemäß Figur 4, treibt, ist in einem Federraum 116 angeordnet, an den eine Leckluftrückführleitung 122 anschließt. Wird über diese Leckluftrückführleitung 122 Druckluft zugeführt, so unterstützt dieser hierdurch aufgebaute Druck die Wirkung der Feder. Die Aufrechterhaltung des Parkzustandes wird auf diese Weise sicherer.

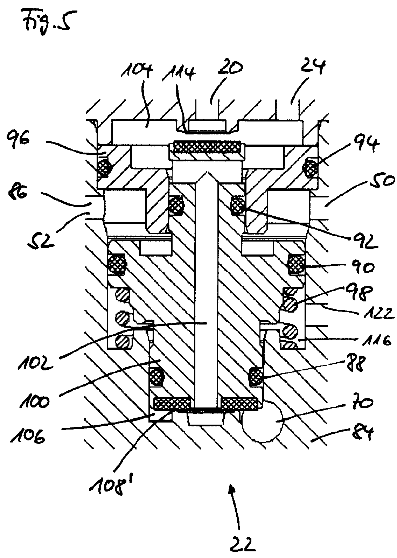

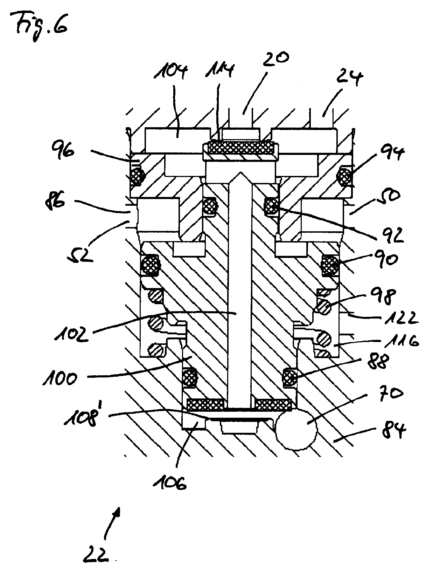

Figur 5 zeigt eine Steuerventileinrichtung 22 mit einem festen Ventilsitz 108' in einer Fahrstellung. Im Gegensatz zu der Ausführungsform gemäß den Figuren 2 bis 4 hat die Steuerventileinrichtung 22 gemäß Figur 5 keinen verschiebbaren Ventilsitzkolben. Vielmehr ist der Ventilsitz 108' fest. Gleichwohl kann der Übergang von der in Figur 5 dargestellten Fahrstellung zu der in Figur 6 dargestellten Parkstellung unterstützt werden, indem der Entlüftungsanschluss 70 belüftet wird, während gleichzeitig der Arbeitsanschluss 20 entlüftet wird.

Die im Zusammenhang mit den Figuren 2 bis 6 beschriebenen Steuerventileinrichtungen sind durch drei O-Ringe 88, 90, 92 geführt und abgedichtet. Die Wirkflächen des Steuerkolbens 100 sind so ausgelegt, dass ein Übergang von der Parkstellung in die Fahrstellung bei bestromter Steuer- und Entlüftungsmagnetventileinrichtung 72 gemäß Figur 1 erfolgt. Sobald die Steuerventileinrichtung 22 dann in die Fahrstellung umgeschaltet ist, kann die Steuer- und Entlüftungsventileinrichtung 72 ohne Wirkung für den Schaltzustand der Steuerventileinrichtung 22 in ihren stromlosen Zustand überführt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Rückschlagventil
- 12: Filtereinheit
- 14: Versorgungsmagnetventil
- 16: Versorgungsleitungsabschnitt
- 18: Drossel
- 20: erster Arbeitsanschluss
- 22: Steuerventileinrichtung
- 24: zweiter Arbeitsanschluss
- 26: Steuereingang
- 28: Steuereingang
- 30: Anhängersteuermodul
- 32: Anhängersteuermodul
- 34: Versorgungsanschluss
- 36: Steueranschluss
- 38: Versorgungsanschluss
- 40: Steueranschluss
- 42: Anhängersteuerleitungszweig
- 44: Anhängersteuerleitungszweig
- 46: Select-Low-Ventil
- 48: Steuerleitung
- 50: Steuereingang
- 52: Relaissteuerleitung
- 54: Wechselventil
- 56: Relaissteuereingang
- 58: Relaisventil
- 60: Relaisversorgungsleitung
- 62: Relaisversorgungsleitung
- 64: Leitungszweig
- 66: Leitungszweig
- 68: Betriebsbremsleitung
- 70: Entlüftungsanschluss
- 72: Steuer- und Entlüftungsventileinrichtung
- 74: Anschluss
- 76: Anschluss
- 78: Entlüftungsmagnetventil
- 80: Drucksensor
- 82: Drucksensor
- 84: Ventilgehäuse
- 86: Relaisanschluss
- 88: O-Ring
- 90: O-Ring
- 92: O-Ring
- 94: O-Ring
- 96: Manschette
- 98: Feder
- 100: Steuerkolben
- 102: Bohrung
- 104: Arbeitsraum
- 106: Entlüftungsraum
- 108: erster Ventilsitz
- 108': erster Ventilsitz
- 110: Ventilsitzkolben
- 112: Feder
- 114: zweiter Ventilsitz
- 116: Federraum
- 118: Entlüftungsausgang
- 120: Rückschlagventil
- 122: Leckluftrückführleitung
- 124: Fläche

## Patentansprüche

1. Elektrisch betätigbares Feststellbremssystem für eine pneumatische Bremsanlage, mit einer einen Steuerkolben (100) aufweisenden Steuerventileinrichtung (22), wobei das Feststellbremssystem mindestens zwei Betriebszustände einnehmen kann, nämlich einen Parkzustand oder einen Fahrzustand, die Betriebszustände selektiv in Abhängigkeit einer Stellung des Steuerkolbens (100) einnehmbar sind und der Parkzustand vorliegt, wenn der Steuerkolben (100) durch die Kraft einer in einem Federraum (116) angeordneten Feder (98) in eine Endlage gezwungen ist, **dadurch gekennzeichnet, dass** aus einem Entlüftungsanschluss (70) der Steuerventileinrichtung (22) austretende Leckluft in den Federraum (116) rückführbar ist.

2. Elektrisch betätigbares Feststellbremssystem nach Anspruch 1, **dadurch gekennzeichnet, dass** die Steuerventileinrichtung zusätzlich zu dem Entlüftungsanschluss (70) einen ersten Arbeitsanschluss (20), einen zweiten Arbeitsanschluss (24) und einen pneumatischen Steuereingang (50) aufweist, wobei die Steuerventileinrichtung (22) durch Belüften des Steuereingangs (50) den Fahrzustand einnimmt, in dem die Arbeitsanschlüsse (20, 24) miteinander verbunden sind und in dem der zweite Arbeitsanschluss (24) gegen den Entlüftungsanschluss (70) abgedichtet ist, und die Steuerventileinrichtung (22) durch Entlüften des Steuereingangs (50) und Federkraft einen Parkzustand einnimmt, in dem die Arbeitsanschlüsse (20, 24) gegeneinander abgedichtet sind und der zweite Arbeitsanschluss (24) mit dem Entlüftungsanschluss (70) verbunden ist.

3. Elektrisch betätigbares Feststellbremssystem nach Anspruch 2, **dadurch gekennzeichnet,**
- **dass** der zweite Arbeitsanschluss (24) mit einem Druckluftverbraucher (26, 50, 56) koppelbar ist,
- **dass** der pneumatische Steuereingang (50) zumindest mittelbar mit dem Steuereingang (56) eines Relaisventils (58) für die Feststellbremse gekoppelt ist,
- **dass** der Entlüftungsanschluss (70) mit einer Steuer- und Entlüftungsventileinrichtung (72) gekoppelt ist und
- **dass** ein Entlüftungsausgang (118) der Steuer- und Entlüftungsventileinrichtung (72) mit dem Federraum (116) gekoppelt ist.

4. Elektrisch betätigbares Feststellbremssystem nach Anspruch 3, **dadurch gekennzeichnet, dass** der Entlüftungsausgang (118) der Steuer- und Entlüftungsventileinrichtung (72) mit einem eine Drossel- oder Stauwirkung erbringenden Bauteil (120) gekoppelt ist und zwischen dem Entlüftungsausgang (118) und dem Bauteil (120) eine zu dem Federraum (116) führende Leckluftrückführleitung (122) abzweigt.

5. Elektrisch betätigbares Feststellbremssystem nach Anspruch 4, **dadurch gekennzeichnet, dass** das die Drossel- oder Stauwirkung erbringenden Bauteil ein Rückschlagventil ist.

6. Elektrisch betätigbares Feststellbremssystem nach Anspruch 5, **dadurch gekennzeichnet, dass** Öffnungs- und Schließdruck des Rückschlagventils so gewählt sind, dass das Rückschlagventil bei einem ersten Druckniveau unterhalb eines Systemdrucks öffnet, um eine Entlüftung des Feststellbremssystems zuzulassen, und bei einem zweiten Druckniveau unterhalb des ersten Druckniveaus zumindest teilweise schließt, um eine Drossel- oder Stauwirkung zu erbringen.

7. Elektrisch betätigbares Feststellbremssystem nach Anspruch 6, **dadurch gekennzeichnet, dass** Öffnungs- und/oder Schließdruck des Rückschlagventils einstellbar sind.

## Claims

1. Electrically actuable parking brake system for a pneumatic brake system, comprising a control valve device (22) which has a control piston (100), it being possible for the parking brake system to adopt at least two operating states, namely a parking state or a driving state, it being possible for the operating states to be adopted selectively depending on a position of the control piston (100), and the parking state being present if the control piston (100) is forced into an end position by the force of a spring (98) which is arranged in a spring chamber (116), **characterised in that** leakage air which escapes from a venting port (70) of the control valve device (22) can be returned into the spring chamber (116).

2. Electrically actuable parking brake system according to claim 1, **characterised in that**, in addition to the venting port (70), the control valve device has a first working port (20), a second working port (24) and a pneumatic control input (50), the control valve device (22) adopting the driving state by way of ventilation of the control input (50), in which driving state the working ports (20, 24) are connected to one another, and in which driving state the second working port (24) is sealed with respect to the venting port (70), and the control valve device (22) adopting a parking state by way of venting of the control input (50) and spring force, in which parking state the working ports (20, 24) are sealed with respect to one another and the second working port (24) is connected to the venting port (70).

3. Electrically actuable parking brake system according to claim 2, **characterised in that**
- the second working port (24) can be coupled to a compressed air consumer (26, 50, 56),
- the pneumatic control input (50) is coupled at least indirectly to the control input (56) of a relay valve (58) for the parking brake,
- the venting port (70) is coupled to a control and venting valve device (72), and
- a venting output (118) of the control and venting valve device (72) is coupled to the spring chamber (116).

4. Electrically actuable parking brake system according to claim 3, **characterised in that** the venting output (118) of the control and venting valve device (72) is coupled to a component (120) which generates a throttling or accumulating effect, and a leakage air return line (122) which leads to the spring chamber (116) branches off between the venting output (118) and the component (120).

5. Electrically actuable parking brake system according to claim 4, **characterised in that** the component which generates a throttling or accumulating effect is a non-return valve.

6. Electrically actuable parking brake system according to claim 5, **characterised in that** the opening and closing pressures of the non-return valve are selected in such a way that the non-return valve opens at a first pressure level below a system pressure, in order to permit venting of the parking brake system, and closes at least partially at a second pressure level below the first pressure level, in order to generate a throttling or accumulating effect.

7. Electrically actuable parking brake system according to claim 5, **characterised in that** the opening and/or closing pressures of the non-return valve can be adjusted.

## Revendications

1. Système de frein de stationnement à actionnement électrique pour une installation de freinage pneumatique, comprenant un dispositif (22) à vanne de commande ayant un piston (100) de commande, le système de frein de stationnement pouvant prendre au moins deux états de fonctionnement, à savoir un état de stationnement ou un état de marche, les états de fonctionnement pouvant être pris sélectivement en fonction d'une position du piston (100) de commande et l'état de stationnement étant présent si le piston (100) de commande est forcé de venir dans une position d'extrémité par la force d'un ressort (98) disposé dans un espace (116) pour un ressort, **caractérisé en ce que** de l'air de fuite sortant d'un raccord (70) de purge du dispositif (22) de vanne de commande peut retourner à l'espace (116) pour le ressort.

2. Système de frein de stationnement à actionnement électrique suivant la revendication 1, **caractérisé en ce que** le dispositif de vanne de commande a, en plus du raccord (70) de purge, un premier raccord (20) de travail et un deuxième raccord (24) de travail et une entrée (50) de commande pneumatique, le dispositif (22) de vanne de commande prenant, par alimentation en air de l'entrée (50) de commande, l'état de marche, dans lequel les raccords (20, 24) de travail communiquent entre eux et dans lequel le deuxième raccord (24) de travail est rendu étanche par rapport au raccord (70) de purge et le dispositif (22) de vanne de commande prend, par purge de l'entrée (50) de commande et par la force du ressort, un état de fonctionnement, dans lequel les raccords (20, 24) de travail sont rendus étanches l'un par rapport à l'autre et le deuxième raccord (24) de travail communique avec le raccord (70) de purge.

3. Système de frein de stationnement à actionnement électrique suivant la revendication 2, **caractérisé**
- **en ce que** le deuxième raccord (24) de travail peut être couplé à un consommateur (26, 50, 56) d'air comprimé,
- **en ce que** l'entrée (50) de commande pneumatique est couplée, au moins indirectement, à l'entrée (56) de commande d'une vanne (58) relais pour le frein de stationnement,
- **en ce que** le raccord (70) de purge est couplé à un dispositif (72) de vanne de commande et de purge et
- **en ce qu'**une sortie (118) de purge du dispositif (72) de vanne de commande et de purge est couplée à l'espace (116) pour le ressort.

4. Système de frein de stationnement à actionnement électrique suivant la revendication 3, **caractérisé en ce que** la sortie (118) de purge du dispositif (72) de vanne de commande et de purge est couplée à un élément (120) apportant un effet d'étranglement ou d'accumulation et un conduit (122) de retour d'air de fuite menant à l'espace (116) pour le ressort est en dérivation entre la sortie (118) de purge et l'élément (120).

5. Système de frein de stationnement à actionnement électrique suivant la revendication 4, **caractérisé en ce que** l'élément apportant un effet d'étranglement ou d'accumulation est un clapet antiretour.

6. Système de frein de stationnement à actionnement électrique suivant la revendication 5, **caractérisé en ce que** les pressions d'ouverture et de fermeture du clapet antiretour sont choisies de manière à ce que le clapet antiretour s'ouvre à un premier niveau de pression inférieur à une pression du système et autorise une purge du système de frein de stationnement et, pour un deuxième niveau de pression inférieur au premier niveau de pression, se ferme, au moins en partie, pour apporter un effet d'étranglement ou d'accumulation.

7. Système de frein de stationnement à actionnement électrique suivant la revendication 6, **caractérisé en ce que** les pressions d'ouverture et/ou de fermeture du clapet antiretour sont réglables.
